Europäisches Patentamt

European Patent Office

Office européen des brevets

(19)

(11) Publication number: **0 197 735 B1**

(12) # EUROPEAN PATENT SPECIFICATION

(45) Date of publication of patent specification: **22.05.91**

(51) Int. Cl.5: **B60C 11/01, B60C 11/11**

(21) Application number: **86302351.1**

(22) Date of filing: **27.03.86**

(54) Pneumatic tyre.

(30) Priority: **30.03.85 JP 67297/85**

(43) Date of publication of application:
**15.10.86 Bulletin 86/42**

(45) Publication of the grant of the patent:
**22.05.91 Bulletin 91/21**

(84) Designated Contracting States:
**DE FR GB**

(56) References cited:
CH-A- 566 877          DE-A- 2 918 183
DE-B- 1 020 883       FR-A- 2 227 965
FR-A- 2 423 355        FR-A- 2 557 513
GB-A- 2 093 777       US-A- 2 770 279

INTERNATIONAL POLYMER SCIENCE AND TECHNOLOGY, vol. 3, no. 3, 1976, page T/40, Kauchuk i Rezina, no. 1, 1975, page 46, Shrewsbury, GB; G.V. NADEZHDIN et al.: "The influence of division of tread pattern on tyre wear"

PATENT ABSTRACTS OF JAPAN, vol. 7, no. 291 (M-265)[1436], 27th December 1983; & JP-A-58 164 405 (SUMITOMO GOMU KOGYO K.K.) 29-09-1983

(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **Fujiwara, Kenichi**
**27 Nishijiyuugaoka 2 Chome Shijimicho**
**Miki-shi Hyogo-ken(JP)**

(74) Representative: **Stewart, Charles Geoffrey**
**SP TYRES UK LIMITED Tyre Technical Division**
**Fort Dunlop Birmingham B24 9QT(GB)**

## Description

This invention relates to a pneumatic radial ply tyre and, in particular, a radial tyre suitable for use for truck, bus, light truck and other vehicles, and is mainly intended to provide improved high speed durability of such tyres without sacrificing wear life, and at the same time, to improve the maneuverability and the ride.

The high speed durability of a tyre is mainly affected by the structure, the profile and the material used for the tyre. First of all, in the structure, a cross ply or bias tyre comprises a carcass composed of a plurality of rubberized ply layers each containing fibre cords embedded therein, the cords of one ply being crossed with respect to the next ply at an angle of 40° to 25° with respect to the equatorial line of the tyre. In one example, the carcass of a cross ply tyre for a truck or bus is composed of several ply layers of virtually unwoven fabric, each ply of which being superimposed with one another.

Secondly the structure of a radial ply tyre comprises a carcass of a substantially radial construction composed of one ply layer containing steel cords embedded therein and turned up around a pair of bead cores and a belt layer composed of 3 to 4 ply layers each containing steel cords embedded therein, said cords of which being crossed with one another at an angle of 15° to 70° with respect to the equatorial line of the tyre and superimposed about said carcass ply beneath the tread to provide a strong belt effect.

As the result of such constructions, a radial ply tyre has a tread with high stiffness and less movement of tread rubber, which leads to high resistance to wear of the tread rubber, and by the same reason as mentioned above, the heat generation and the rolling resistance are also very good.

On the contrary, in the case of bias ply construction tyres with a carcass composed of several ply layers superimposed on one another and a belt layer composed of several ply layers, each ply of which has its cords crossed with respect to the adjacent ply and disposed between the said carcass and the tread rubber.

As the result, the carcass of bias ply tyres is substantially thicker than the carcass of radial tyres and the movement of tread rubber, while a tyre is in contact with ground, is larger than that of radial ply tyre because of the carcass ply construction of textile cords having low stiffness as compared with steel cords.

Further, a carcass and a belt layer has to deform together and this causes variation of the cord angles under load which is the so-called pantographic movement, which leads to increased heat generation and to lower resistance to wear because of the large movement of rubber. This also increases the rolling resistance. These characteristics are summarized in Table 1.

## Table 1

### Comparison of Performance Between Bias and Radial Tyre

| Usage | Performance (Index) | Bias Tyre | Radial Tyre |
|---|---|---|---|
| Tyres for Truck and Bus 10.00-20 10.00 R 20 | Tread Wear Resistance | 100 | 150-200 |
| | Rolling Resistance (70 km/h) | 100 | 68-72 |
| | Fuel Comsumption | 100 | 88-92 |
| | Heat Generation at Shoulder under High Speed Travelling | 100 | 40-50 |

From Table 1 it can be seen that a radial construction is one which can display its ability under high speed travelling on a good paved road.

Next, concerning the profile of a tyre, which is generally expressed by the so called aspect ratio, that is, the ratio of the section height to the section width.

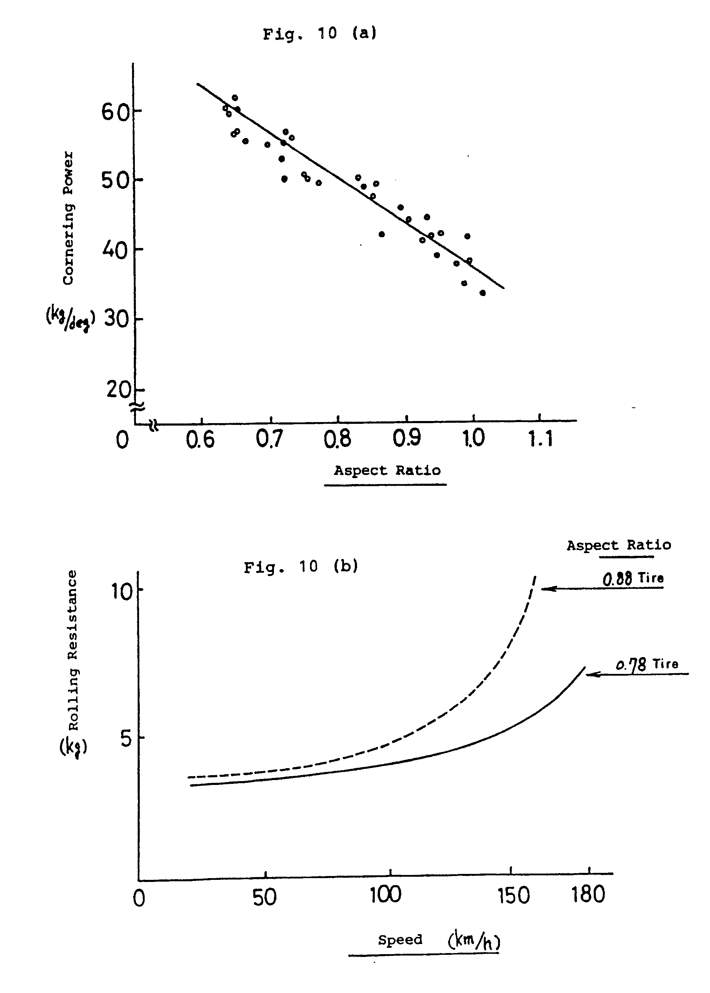

The merits of low profile tyres are such that the cornering power is increased by the increase in the lateral stiffness with the increase of overall tyre width due to the adoption of low profile (see Fig 10a). Accordingly, the maneuverability of the vehicles is improved together with a decrease in the energy loss brought about by decreasing of the radial deflection of such tyres which leads to a decrease of heat generation and rolling resistance. Accordingly, the durability for high speed running and the fuel consumption are improved (see Fig 10b).

Next, taking consideration of high speed durability from the stand point of material used for the tyre construction, the factors which mainly affect the tyre performance are the tread rubber compound and the cord material of tyres. With regard to the rubber compound for the tread, the material suitable for the tread must be well-balanced with respect to the performances of not only heat generation but also the resistance to wear and cut. As is well known, polybutadiene rubber (BR) and nature rubber are superior to SBR in heat generation and the larger the particle of carbon black as filler for reinforcement the lower the heat generation. It is also known that when the volume of carbon black filler in the rubber compound increases, the heat generation increases. As to the heat resistance of the cord materials for the carcass, it is known that steel cords show the best performance in the order of steel, polyester, nylon and rayon.

As will be understood from the summary above, research works for the betterment of high speed running durability of tyres have resulted in big range switching over in tyre construction, from bias to radial, from normal aspect ratio tyres to low profile tyres, from rayon to nylon, from nylon to polyester and from polyester to steel which has caused a big advancement of the high speed durability in accordance with these changes.

However, lately with the remarkable improvement of road situations such as the development of expressway networks and the like, the chances to drive at high speed have increased and the demand for tyres having long life has become more conspicuous for economic reasons. However, according to the prior art of tyre design, the high speed performance has been increased only with sacrificing the wear life. Alternatively in the prior art the wear life has only been increased with a sacrifice in the high speed performance. Hitherto in both there has only been such antinomic design activity in tyres.

For example, in order to increase the durability at high speed, the thickness of the tread has been designed to be as thin as possible to decrease the heat generation. Accordingly, the wear life of such tyres become short as an inevitable consequence.

However, the users of tyres cannot be satisfied with such unbalanced tyre performance for any length of time, the requirement for well balanced tyre properties, which give a long life and an improved high speed durability has become conspicuous of late.

That is, it is required to increase the durability of such tyres together with an increase in the depth of longitudinal main grooves and the thickness of the tread.

As above mentioned the prior art is unable to provide so well balanced an improvement with simultaneous increase in the durability at high speed and resistance to wear (long life).

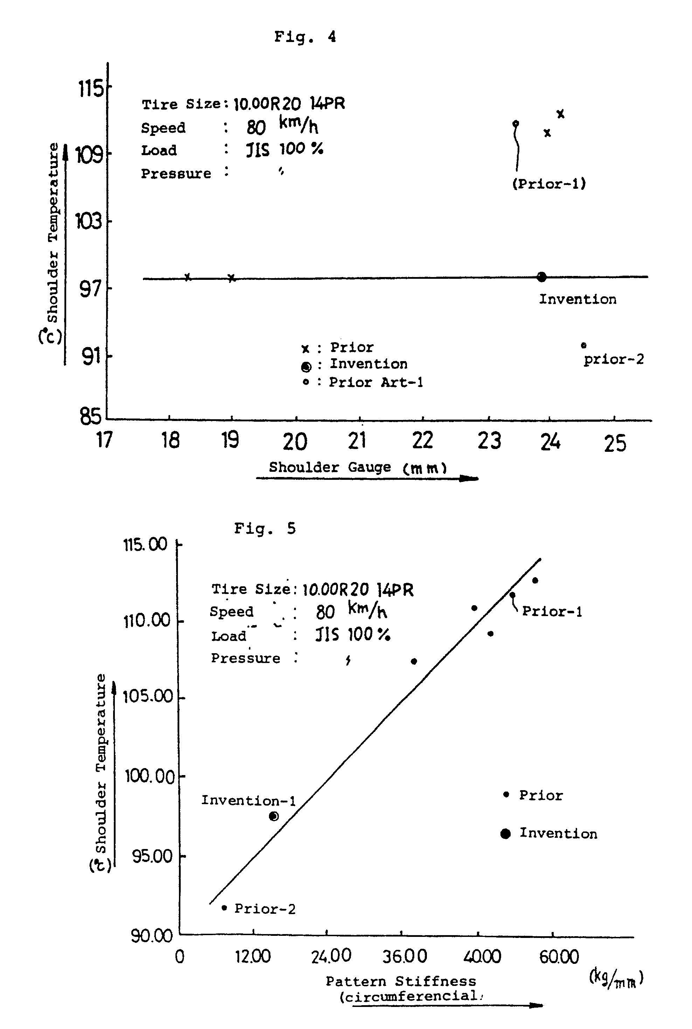

A known tyre according to the preamble of claim 1 is shown, e.g. in Fig.3(a) of the drawings.

However, the inventors of the present invention have made various investigations into tread patterns which can decrease the heat generation of tyre as well as being superior in the resistance wear.

Generally, it is known that the temperature generated, while a tyre is in rotation, is highest at both shoulder parts of the tyre. The inventor of this invention, selected for investigation seven items such as a ratio between surface area of cut grooves at the shoulder parts, shape index (cross sectional area of loaded tyre/free surface area), pattern transverse stiffness, pattern circumferential stiffness, volume of cut groove, shoulder gauge and tread radius as factors of temperature rise and examined the correlation between temperature and the above factors using multiple regression analysis. He discovered that "volume of cut groove" and "pattern circumferential stiffness" greatly contribute to temperature rise.

Accordingly the present invention provides a pneumatic tyre comprising the features of claim 1, in which the rubber surface of the tyre tread is divided by at least two longitudinal main grooves extending in the circumferential direction of the tyre in the pattern of zigzag or wavy line to provide a tread crown part having a width corresponding to about 30 to 65% of the tread width and centering at the equatorial plane of the tyre and tread shoulder parts lying on either side of the said tread crown part, one or more central ribs or rows of central blocks comprising blocks of various shapes are provided in the said crown part and outer ribs or outer rows of blocks in both shoulder parts, a plurality of narrow cut grooves extending in the axial direction of the tyre being provided for ribs or blocks on both said shoulder parts to provide a circumferential stiffness index of the pattern and a volume index of the cut groove of 30 to 70 and 2.5 to 15, respectively.

The definitions of "pattern stiffness" and "volume index" of the cut groove are as follows:-

3

Pattern stiffness index

In said shoulder parts, pattern stiffness which is pattern stiffness in contact length with ground under specified load and inner pressure, is defined by below equations.

$$K_P = \frac{F}{y} = 1/(\frac{h^3}{3EI} + \frac{h}{AG}) \quad \cdots\cdots\cdots ①$$

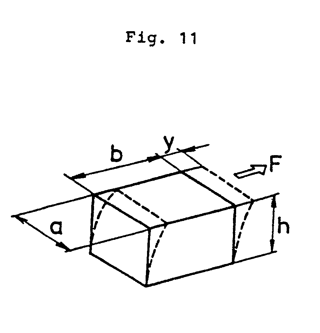

Kp:  pattern stiffness (kg/mm)
F:   tangential force at grounding surface (kg)
y:   variation of pattern (mm)
h:   pattern depth (mm)
E:   elastic modulus at elongation of tread rubber (kg/mm²)
G:   shearing modulus ( = E/3 (kg/mm²)
I:   secondary moment at block section (mm⁴) I = ab³/12 in the block shown in Fig 11
A:   sectional area of block (mm²)

In the case of actual pattern, the pattern depth is different from the h1 of cut groove in the shoulder parts and several number of blocks are adopted, so it is treated follow, the pattern stiffness at tread surface,

Kps = Kps1 + Kps2 + ... + Kpsn
to use h = h1 in equation①

the pattern stiffness (KpB) at base tread part is to use

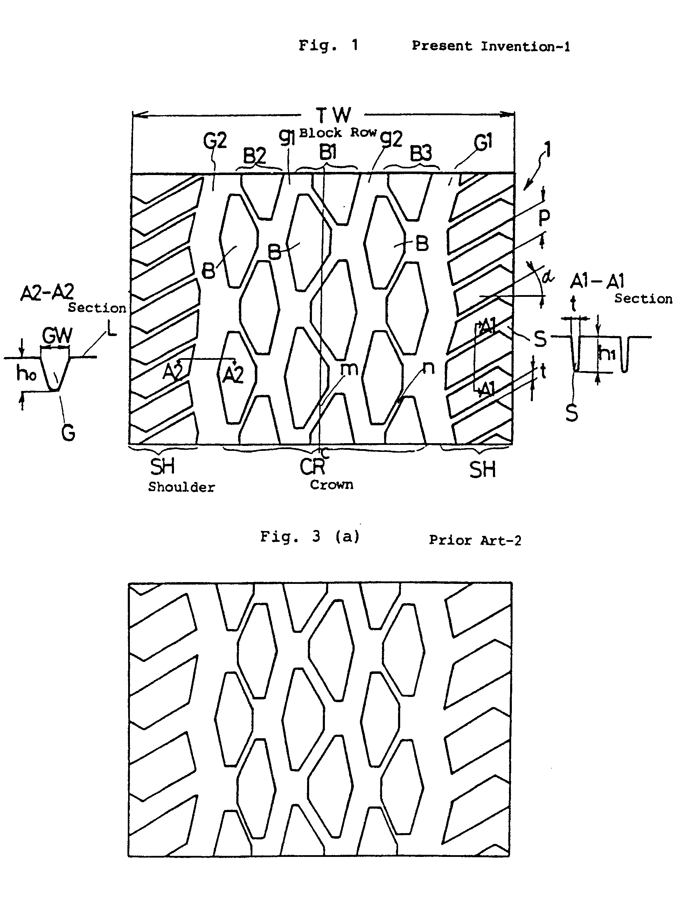

h = ho - h1 (Fig 1) in equation①

the total pattern stiffness KpT

$$Kp_T = 1/(\frac{1}{Kps} + \frac{1}{Kp_B}$$

the pattern stiffness Kpo in the case of no subgroove is to use

h = ho in equation①

$$\text{circumferential stiffness index of the pattern} = \frac{Kp_T}{Kpo} \times 100$$

Volume index of the cut groove

The ratio of the volume of groove to total volume of shoulder part.

Volume of index

$$\frac{\text{volume of cut grooves in shoulder part}}{\text{surface area of shoulder part} \times \text{pattern depth}}$$

4

Similar tyres are objects of further inventions of the applicant, e.g. EP-A-0 202 788 or EP-A-0 205 233. Some examples of the invention and the prior art will now be described in conjunction with the drawings in which:-

Fig 1 is a developed plan view of a tread pattern having a series of cut grooves in the shoulder parts according to the present invention;

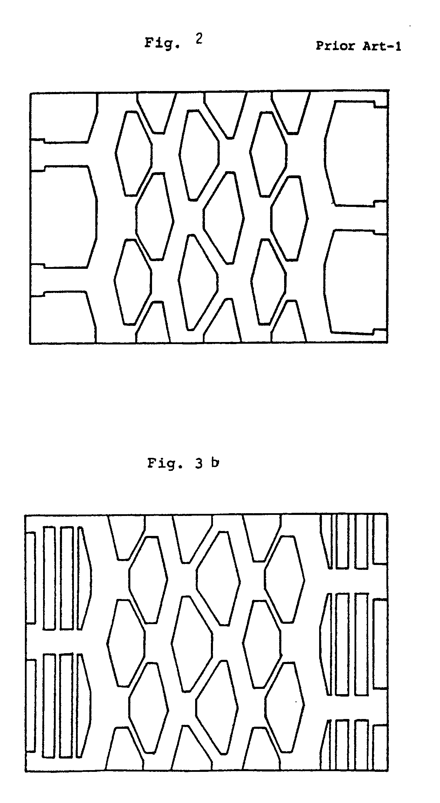

Fig 2 is a developed plan view of a tread pattern having a series of lateral grooves in the shoulder parts according to the prior art;

Fig 3a is a developed plan view of a prior art tread pattern in which the index of groove volume is out of the scope of the present invention;

Fig 3b is a developed plan view of a tread pattern described as No 4 pattern in Fig 7 and Fig 8.

Fig 4 is a graph showing the relation of rubber gauge with heat generation at the shoulder part for the tread pattern of example 1 (Fig 1) according to the present invention, that of control example (shown in Fig 2 and Fig 3), of the conventional tyre;

Fig 5 is a graph showing the relation between pattern circumferential stiffness and temperature in the shoulder part;

Fig 6 is a graph showing the relation between volumes of cut grooves and temperature;

Fig 8 is a graph showing the relation between transverse stiffness and temperature at the shoulder parts;

Fig 9 is a graph showing the relation between pattern stiffness and volume of groove;

Fig 10a is a graph showing the relation between cornering power and the aspect ratio of a tyre;

Fig 10b is a graph showing the relation between rolling resistance and the aspect ratio;

Fig 11 is a view of block sample for describing the secondary mount of the stiffness index at the section of block;

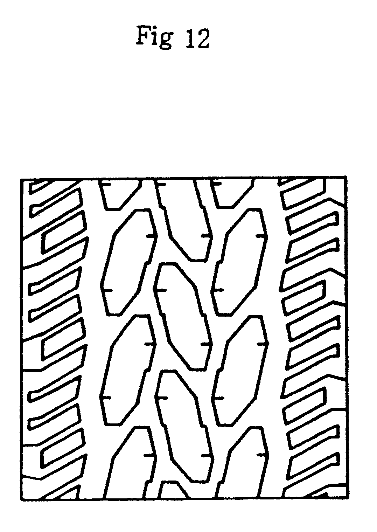

Fig 12 is a developed plane view of another embodiment of tread pattern according to the present invention.

As shown in Fig 1 the tread 1 comprises a crown part CR defined by two main longitudinal grooves G1/G2 having deepest depth extending in the circumferential direction of the tyre and centered about the equatorial plane C of the tyre so as to be spaced laterally by 30 to 65% of the tread width TW. The crown part CR also includes at both sides circumferentially extending longitudinal narrower grooves g1 and g2 and sub-grooves m and n extending between the longitudinal main grooves G1, G2 and between the main groove G1, G2 and the narrow groove g1, g2 to communicate with each other so as to form rows of blocks B1, B2 and B3 in the crown part, each row of blocks being approximately parallelogrammatic blocks B.

The shoulders S H of the tyre tread lie outside the main grooves G1 and G2 and include a plurality of cuts S in the circumferential direction of the tyre at equal pitches P of 15 mm and at inclination angle $\propto$ of 30 degrees with respect to the equatorial plane of the tyre. The width t and depth h1 of the cuts S are 2 mm and 13 mm respectively and the depth h0 of the longitudinal main grooves G1 and G2 is to be that of extra heavy tread type. For example, a depth ranging from 16.6 mm to 20.6 mm is adopted to the tyre of 10.00 R 20 in size. In the present example, a depth is set at 18.00 mm. A width GW of the groove G in the U-shape at cross section A2 - A2 is 14.5 mm. A longitudinal narrow groove g is 18 mm depth and 9.5 mm width; a sub-groove m is 5 mm width and 11 m depth; and another sub-groove n is 2 mm width and 9 mm depth. In the example No 1 shown In Fig 1 the pattern stiffness index and cut groove volume index are 64 and 10.5 respectively.

On the other hand, control examples 1 and 2 according to the prior art were made for trial. The specifications of test samples are listed in Table 4.

All above said test samples were 10.00 R 20 14 PR in size and tyre construction except for the tread pattern and the component materials were of the same specification.

## Table 4

|  | Example 1 | Control example 2 | Control example 1 |
|---|---|---|---|
| Depth of cut at shoulder part (mm) | 13 | 18 | 5.5 |
| Width of cut at shoulder part (mm) | 2 | 10 | 11.5 |
| Ratio of cut surface area at shoulder part | 0.19 | 0.38 | 0.18 |
| Shape index at shoulder part | 0.44 | 0.34 | 0.72 |
| Pattern transverse stiffness at shoulder part (kg/mm) | 18.6 | 8.8 | 52.7 |
| Pattern circumferential stiffness at shoulder part (kg/mm) | 15.6 (64) | 7.7 (38) | 53.8 (94) |
| Volume of cut at shoulder part (cm$^3$) | 4.160 (10.5) | 14.400 (36.4) | 1.898 (4.8) |
| Thickness of rubber at shoulder part (mm) | 23.9 | 24.6 | 23.5 |
| Tread radius of curvature at 100% air pressure (mm) | 585 | 585 | 585 |
| Tread pattern | Fig 1 | Fig 3a | Fig 2 |

The numeral in parenthesis, ( ), indicates an index.

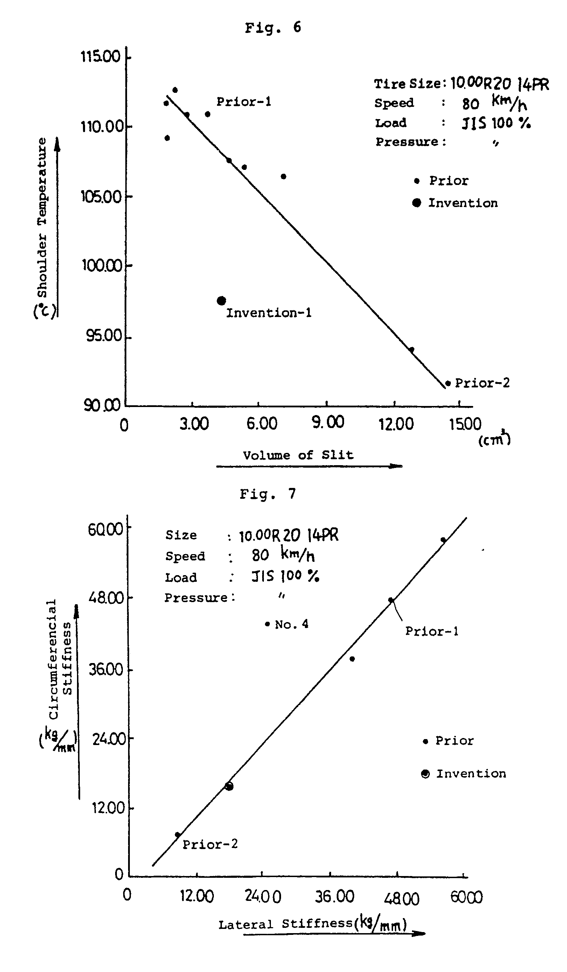

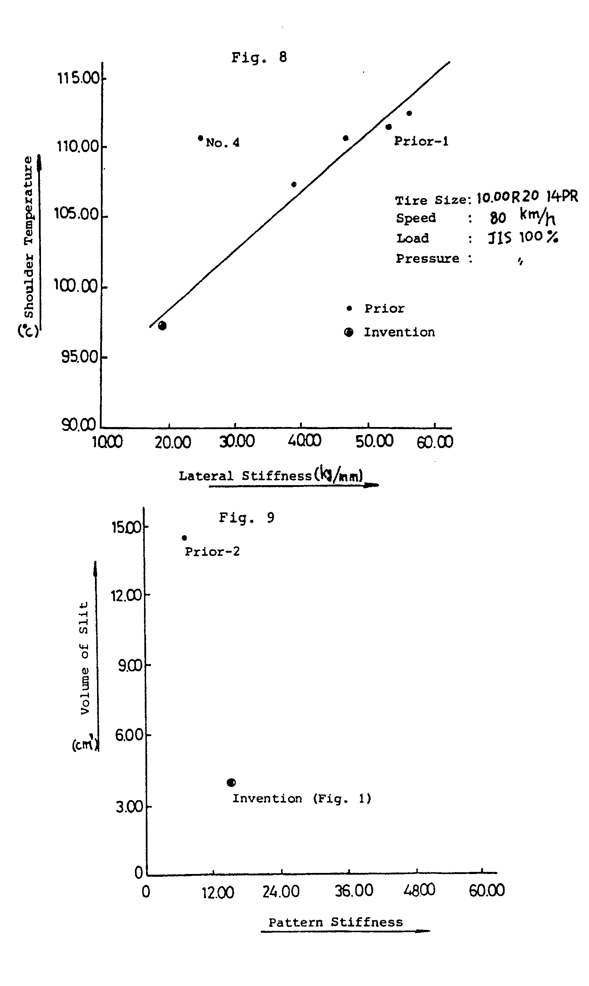

From these results various conclusions may be drawn. To begin with Fig 5 graphically shows the relation between pattern circumferential stiffness at the shoulder part and temperature, wherein the lower the circumferential stiffness, the lower the temperature at the shoulder part. Fig 6 shows a relation between the volume of cut groove and temperature, wherein the larger the volume of cut groove, the lower the temperature, but as regards an embodiment of this invention, it can be fully understood that even when the volume of cut groove is equal to that of the conventional tyre, a temperature is nearly 20° C lower than that in the conventional tyre. A comparison of transverse stiffness with circumferential one of a pattern indicates that, as shown in Fig 8, a temperature in the pattern No 4 having transverse stiffness lower than circumferential stiffness as shown in Fig 7 is 111° C, degrees which is not low at all.

Incidentally, circumferential stiffness per pitch in the pattern No 4 was 44.0 whereas transverse stiffness was 25.2. From the above fact, it has been shown that lowering of temperature must depend on a reduction of circumferential stiffness rather than transverse one.

Fig 4 graphically shows that the relation between the tread gauge at the shoulder parts and temperature in the tyre, wherein a temperature rises with the increase in tread gauge in conventional tyre but, in the embodiment of this invention (Fig 1), despite the shoulder gauge of 23.8 mm, the temperature of the tyre is as low as that of the conventional tyre having the tread gauge of 18 to 19 mm.

It is supposed that lowering of stiffness of the pattern depending on pattern effect leads to decrease in resistance of the tyre to wear. However, in this respect, Fig 9 shows that values of pattern stiffness of tyres shown in Fig 1 and Fig 3a are 15.6 and 7.7 respectively, that is 1:0.5 in terms of ratio, and volumes of cut grooves are 4.16 cm$^3$ and 14.4 cm$^3$ respectively, that is 1:3.5 in ratio. In the pattern shown in Fig 1 the volume of groove is small in proportion to pattern stiffness (Fig 9) as compared with that shown in Fig 3a. That is to say, it has been found that when reducing pattern stiffness, resistance to wear is reduced with the increase in volume of the cut groove and, therefore, by setting narrow the width t of cut in the shoulder part as in the pattern shown in Fig 1, control over temperature rise and prevention of decrease in resistance to wear are ensured. An appropriate width t of a cut S is from 0.5 to 5 mm, more preferably from 1 to 3 mm. A volume index of the cut is preferably within the range from 2.5 to 15. An index exceeding 16 results in too large volume of the cut which accelerates wear of rubber and further unfavourably generates noise or collects pebbles. On the other hand, too small an index not exceeding 2.4 degrades wet grip and causes resultant problems in safety of vehicles. An index of circumferential stiffness is preferably from 30 to 70 but because when being low such as not greater than 29, causes the rubber block to tend to chip off and, being 71 or higher, invites problem in generation of heat. Provision of a plurality of cut grooves for adapting the circumferential stiffness index to range from 30 to 70 improves ground contacting performance of the tread and reduces the wear of tyre occurring during slippage, thereby the so-called shoulder wear being markedly eliminated.

The test of durability to high speed running for the said sample tyres was performed according to the following method and the results thereof are shown in Table 5.

## Table 5

| | Breaking speed : length of time of running |
|---|---|
| Example 1 | 130 km/h : 60 minutes to fail |
| Control example 1 | 100 km/h : 50 minutes to fail |
| Control example 2 | 130 km/h : 110 minutes to fail |

Tyres were driven on the drum type running tester according to the stepped speed running method on conditions that:

Load : 3.780 kg

Initial internal pressure : 7.25 $kgf/cm^2$

Rim : 7.50 v

wherein results were evaluated by the level of speed at which the tyre failed due to heat generation and the length of time for running at the above speed. The tyre of Example 1 according to the present invention cleared a speed of 130 kg/h, but the tyre of Control example 1 which attached much importance to the resistance to wear, could clear only 100 km/h. The tyre of Control example 2 which sacrificed resistance to wear, cleared a speed of 130 km/h because of lower heat generation due to reduced pattern circumferential stiffness. The tyre according to the present invention designed to be provided with "cut grooves" on the shoulder zones for reducing pattern circumferential stiffness, controlled heat generation of durability.

As regards resistance of the tread to wear, comparison tests using a truck were performed and amounts of wear of tread rubber per 1,000 km running were compared by measurements of remaining groove depth after 50,000 km running. As shown in Table 6, a tyre (Example 1) according to the present invention demonstrated an excellent resistance to wear by the contribution of heat generation to a low degree as above described, more uniform distribution of ground contact pressure and high grip performance.

## Table 6

### Index of Wear of Tread Rubber

| | |
|---|---|
| Control example 1 | 100 |
| Control example 2 | 80 |
| Example 1 | 105 |

* Note : The larger the index number, the better the resistance to wear.
The above index number may be regarded as a ratio between wear life span of treads.
Values obtained from comparison of wet grip performances are shown in Table 7.

## Table 7

### Wet Grip Performance

| | Control example 1 | Control example 2 | Example 1 |
|---|---|---|---|
| Index of wet grip | 100 | 110 | 115 |

Wet grip performances were observed by confirming braking distances travelled by a truck driven at a speed of 80 km/h on an asphalt-paved wet road and indicated in terms of index on the assumption that the index of braking distance of Control example 1 is 100. In this case too, the larger the index number the better the performance and the tyre (Example 1) according to the present invention which exhibited a strong braking force was verified to be excellent in wet grip performance as one of important requirements for safety of a truck.

Thus, as has been described, the invention provides a well balanced tyre in which a plurality of narrow cut are disposed on both shoulder parts, where the heat generation is most remarkably low for a tyre. The low heat generation is by means of decreasing the pattern stiffness so that the high speed durability is improved in spite of the extra heavy tread with deepest longitudinal main grooves and wear life of tread, wandering performance including wet grip performance, ride feeling and handling stability can simultaneously and effectively improved in well-balanced manner.

## Claims

1. A pneumatic radial tyre comprising a tread provided with at least two main longitudinal grooves ($G_1$, $G_2$) extending circumferentially in a zigzag or wavy line to divide the tread into a crown portion (CR) of a width of 30 to 65% of the tread width (TW) and two shoulder portions (SH) one on either side of the crown portion, the crown portion (CR) being provided with one or more central ribs or central rows of blocks (B) each shoulder portion being divided into blocks substantially separated in the circumferential direction of the tyre by a plurality of lateral grooves (S) extending in the axial direction of the tyre or an acute angle to the axial direction, characterised in that said lateral grooves are narrow cut grooves (S), the width of the narrow cut grooves (S) is in a range of 0.5 to 5mm, and the volume index for the narrow cut groove is in a range of 2.5 to 15, and further the circumferential stiffness index for the tread pattern is in a range of 30 to 70, wherein said volume index for the narrow cut groove is defined as follows:

$$Volume\ Index\ =\ \frac{V}{S\ x\ d}\ x\ 100$$

wherein:

V = Total volume of the narrow cut grooves formed in each shoulder portion
S = Surface area of the shoulder portion
d = Depth of the main longitudinal groove
and wherein said circumferential stiffness index for the tread pattern is defined as follows:

$$Circumferential\ Stiffness\ Index = \frac{Kpt}{Kpo}\ X\ 100$$

wherein:

Kpo = Circumferential stiffness of each shoulder portion when no groove is formed
Kpt = Circumferential stiffness of the same shoulder portion when said narrow grooves are formed
and further said circumferential stiffness is defined as follows:
Circumferential stiffness = F/y
wherein:
F = Tangential force in the circumferential direction of the tyre at the ground contacting surface of the shoulder portion [Kp]
y = Variation of the ground contacting surface in the circumferential direction of the tyre [mm].

2. A tyre according to claim 1 characterised by the narrow cut grooves (S) extend at an angle to the axial direction of 30°.

3. A tyre according to claims 1 and 2 characterised in that the narrow cut grooves (S) are spaced apart around the tyre at a pitch of 15mm.

4. A tyre according to any one of claims 1 to 3 characterised in that the pattern depth is in the range of 16.6 to 20.6mm.

5. A tyre according to any one of claims 1 to 4 characterised in that the main grooves (G1,G2) are of V-shaped cross section and have width of 14.5mm.

6. A tyre according to any one of claims 1 to 5 characterised in that the crown portion (CR) comprises tread blocks (B) separated by longitudinal narrow grooves (g1,g2) 9.5mm wide and 18.0mm deep and first transverse narrow grooves (m) 5mm wide and 11mm deep and second transverse narrow grooves (n) 2mm wide and 9mm deep respectively.

7. A tyre according to claim 6 characterised by a pattern stiffness index and cut groove volume index of 64 and 10.5 respectively.

**Revendications**

1. Pneumatique à carcasse radiale comprenant une bande de roulement qui a au moins deux gorges longitudinales principales (G1, G2) disposées circonférentiellement sous forme sinueuse ou ondulée afin qu'elles divisent la bande de roulement en une partie bombée (CR) ayant une largeur comprise entre 30 et 65 % de la largeur (TW) de la bande de roulement, et deux parties d'épaulement (SH) placées de part et d'autre de la partie bombée, la partie bombée (CR) ayant une ou plusieurs nervures centrales ou rangées centrales de blocs (B), chaque partie d'épaulement étant divisée en blocs sensiblement séparés dans la direction circonférentielle du pneumatique par plusieurs gorges latérales (S) placées dans la direction axiale du pneumatique ou faisant un angle aigu avec cette direction axiale, caractérisé en ce que les gorges latérales sont d'étroites gorges découpées (S), la largeur des étroites gorges découpées (S) est comprise entre 0,5 et 5 mm, et l'indice en volume de l'étroite gorge découpée est compris entre 2,5 et 15, et, en outre, l'indice de rigidité circonférentielle de la sculpture de la bande de roulement est compris entre 30 et 70, cet indice en volume pour l'étroite gorge découpée étant défini par la relation suivante

indice en volume = V/(S x d) x 100

V étant le volume total des étroites gorges découpées formées dans chaque partie d'épaulement,

S étant la surface de la partie d'épaulement,

d étant la profondeur de la gorge longitudinale principale,

et dans lequel l'indice de rigidité circonférentielle de la sculpture de la bande de roulement est déterminé de la manière suivante :

indice de rigidité circonférentielle = (Kpt/Kpo)x100

Kpo étant la rigidité circonférentielle de chaque partie d'épaulement lorsqu'aucune gorge n'est formée,

Kpt étant la rigidité circonférentielle de la même partie d'épaulement lorsque d'étroites gorges sont formées, et

la rigidité circonférentielle est déterminée par la relation suivante

rigidité circonférentielle = F/y

F étant la force tangentielle, dans la direction circonférentielle du pneumatique au niveau de la surface de contact avec le sol de la partie d'épaulement [Kp],

y étant la variation de la surface de contact avec le sol dans la direction circonférentielle du pneumatique (mm).

2. Pneumatique selon la revendication 1, caractérisé en ce que les étroites gorges découpées (S) font un angle de 30° avec la direction axiale.

3. Pneumatique selon la revendication 1 ou 2, caractérisé en ce que les étroites gorges découpées (S) sont espacées autour du pneumatique avec un pas de 15 mm.

4. Pneumatique selon l'une quelconque des revendications 1 à 3, caractérisé en ce que la profondeur de la sculpture est comprise entre 16,6 et 20,6 mm.

5. Pneumatique selon l'une quelconque des revendications 1 à 4, caractérisé en ce que les gorges principales (G1, G2) ont une section en V et une largeur de 14,5 mm.

6. Pneumatique selon l'une quelconque des revendications 1 à 5, caractérisé en ce que la partie bombée (CR) comprend des blocs (V) de bande de roulement séparés par d'étroites gorges longitudinales (g1, g2) de 9,5 mm de largeur et 18,0 mm de profondeur et des premières étroites gorges transversales (m) de 5 mm de largeur et de 11 mm de profondeur et de secondes étroites gorges transversales (n) de 2 mm de largeur et 9 mm d'épaisseur respectivement.

7. Pneumatique selon la revendication 6, caractérisé par un indice de rigidité de motif et un indice en volume des gorges découpées de 64 et 10,5 respectivement.

**Ansprüche**

1. Luftreifen mit einer Lauffläche, die mit mindestens zwei Haupt-Längsnuten (G1, G2) versehen ist, die sich in Umfangsrichtung in einer Zick-Zack- oder Wellen-Linie erstrecken und die Lauffläche in einen Kronenabschnitt (CR) mit einer Breite von 30 bis 65% der Laufflächenbreite (TW) und zwei Schulterabschnitte (SH) an beiden Seiten des Kronenabschnitts unterteilen, wobei der Kronenabschnitt (CR) mit einer oder mehreren Mittelrippen oder mittleren Blockreihen (B) versehen ist, jeder Schulterabschnitt in Blöcke unterteilt ist, die im wesentlichen in Umfangsrichtung des Reifens durch eine Vielzahl von Seitennuten (S) getrennt sind, die sich in Axialrichtung des Reifens oder in einem spitzen Winkel zur Axialrichtung erstrecken, dadurch gekennzeichnet, daß die Seitennuten enge Schnitt-Nuten (S) sind, daß die Breite der engen Schnitt-Nuten (S) in einem Bereich von 0,5 bis 5 mm liegt und daß der Volumenindex für die engen Schnitt-Nut sich in einem Bereich von 2,5 bis 15 befindet, und daß weiter der Umfangssteifigkeits-Index für das Laufstreifenmuster sich in einem Bereich von 30 bis 70 befindet, wobei der Volumenindex für die enge Schnitt-Nut auf folgende Weise definiert ist:

$$\text{Volumenindex} = \frac{V}{S \times d} \times 100$$

wobei:

V = Gesamtvolumen der in jedem Schulterabschnitt gebildeten engen Schnitt-Nuten,

S = Oberflächengröße des Schulterabschnitts,

d = Tiefe der Hauptlängsnut ist,

und wobei der Umfangssteifigkeits-Index für das Laufstreifenmuster in folgender Weise definiert ist:

$$\text{Umfangssteifigkeits-Index} = \frac{Kpt}{Kpo} \times 100,$$

wobei:

Kpo = Umfangssteifigkeit jedes Schulterabschnitts, wenn keine Nut gebildet ist, und

Kpt = Umfangssteifigkeit des gleichen Schulterabschnitts, wenn die engen Nuten gebildet sind, und weiter die Umfangssteifigkeit wie folgt definiert ist:

Umfangssteifigkeit = F/y,

wobei:

F = Tangentialkraft in Umfangsrichtung des Reifens an der Bodenaufstandsfläche des Schulterabschnitts [kp],

y = Änderung der Bodenberührungsfläche in Umfangsrichtung des Reifens [mm] ist.

2. Reifen nach Anspruch 1, dadurch gekennzeichnet, daß sich die engen Schnitt-Nuten (S) mit einem Winkel von 30° zur Axialrichtung erstrecken.

3. Reifen nach Anspruch 1 und 2, dadurch gekennzeichnet, daß die engen Schnitt-Nuten (S) einen Ident-Abstand um den Reifen von 15 mm besitzen.

4. Reifen nach einem der Ansprüche 1 bis 3, dadurch gekennzeichnet, daß die Mustertiefe im Bereich von 16,6 bis 20,6 mm liegt.

5. Reifen nach einem der Ansprüche 1 bis 4, dadurch gekennzeichnet, daß die Hauptnuten (G1, G2) V-förmigen Querschnitt und eine Breite von 14,5 mm besitzen.

6. Reifen nach einem der Ansprüche 1 bis 5, dadurch gekennzeichnet, daß der Kronenabschnitt (CR) Laufstreifenblöcke (B) umfaßt, die durch enge Längsnuten (g1, g2) mit 9,5 mm Breite und 18,0 mm Tiefe und erste enge Quernuten (m) mit 5 mm Breite und 11 mm Tiefe und zweite Quernuten (n) mit 2 mm Breite und 9 mm Tiefe getrennt sind.

7. Reifen nach Anspruch 6, gekennzeichnet durch einen Mustersteifigkeits-Index und einen Schnittnut-Volumenindex von 64 bzw. 10,5.

Fig. 1    Present Invention-1

Fig. 3 (a)    Prior Art-2

Fig. 2

Prior Art-1

Fig. 3 b

Fig. 4

Tire Size: 10.00R20 14PR
Speed    :  80  km/h
Load     :  JIS 100 %
Pressure :

x : Prior
◉ : Invention
○ : Prior Art-1

Fig. 5

Tire Size: 10.00R20 14PR
Speed    :  80  km/h
Load     :  JIS 100 %
Pressure :

● : Prior
● : Invention

14

Fig. 6

Tire Size: 10.00R20 14PR
Speed    :  80 Km/h
Load     :  JIS 100 %
Pressure :      "

• Prior
● Invention

Fig. 7

Size     : 10.00R20 14PR
Speed    : 80 km/h
Load     : JIS 100 %
Pressure :      "

• Prior
◉ Invention

15

Fig. 8

Fig. 9

Fig. 10 (a)

Fig. 10 (b)

Fig. 11

Fig 12